(19) Europäisches Patentamt
European Patent Office
Office européen des brevets

(11) **EP 3 226 991 B1**

(12) **EUROPÄISCHE PATENTSCHRIFT**

(45) Veröffentlichungstag und Bekanntmachung des Hinweises auf die Patenterteilung:
**17.10.2018   Patentblatt 2018/42**

(21) Anmeldenummer: **15801681.6**

(22) Anmeldetag: **26.11.2015**

(51) Int Cl.:
**B01D 3/32** (2006.01)          **B01J 19/30** (2006.01)

(86) Internationale Anmeldenummer:
**PCT/EP2015/002378**

(87) Internationale Veröffentlichungsnummer:
**WO 2016/087031 (09.06.2016 Gazette 2016/23)**

(54) **TRÄGER FÜR EINE PACKUNGSSÄULE**

SUPPORT FOR A PACKING COLUMN

SUPPORT DE COLONNE À REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2014   EP 14004058**

(43) Veröffentlichungstag der Anmeldung:
**11.10.2017   Patentblatt 2017/41**

(73) Patentinhaber: **Linde Aktiengesellschaft
80331 München (DE)**

(72) Erfinder: **KANZLER, Karlmann
84504 Altötting (DE)**

(74) Vertreter: **Meilinger, Claudia Sabine
Linde AG
Technology & Innovation
Corporate Intellectual Property
Dr.-Carl-von-Linde-Straße 6-14
82049 Pullach (DE)**

(56) Entgegenhaltungen:
**WO-A1-02/06601          CH-A5- 643 907
DE-C- 311 788          US-A- 3 642 258
US-A- 4 028 442          US-A- 5 069 830
US-A1- 2004 206 617**

## Beschreibung

Die Erfindung betrifft einen Träger für einen Tragrost beziehungsweise Tragsammler in einer Packungssäule, sowie eine Packungssäule, bevorzugt zur Behandlung eines Gases beziehungsweise eines zweiphasigen Fluids, bevorzugt zur Gaszerlegung beziehungsweise zur Luftzerlegung.

Ein solcher Träger ist dazu eingerichtet, sich über eine Mehrzahl von Auflagern, in der Regel zwischen zwei Auflagern oder auf einem ringförmigen Auflager, frei zu erstrecken und eine Last, in der Regel eine vertikale Gewichtslast, aufzunehmen. Je nach Höhe der Last und Länge der freien Erstreckung müssen Tragprofile eingesetzt werden, die ein hohes Flächenträgheitsmoment in Belastungsrichtung aufweisen. Hier wird im Folgenden auf die in der Mechanik übliche vereinfachte Modellbetrachtung zur Berechnung des Flächenträgheitsmoments (I) Bezug genommen. Der maßgeblichen Faktoren sind dabei die Geometrie des Tragprofils und ihre Ausrichtung zur Belastung. Dabei wird die Abmessung in Belastungsrichtung als Höhe ($h$) und die Abmessung quer zur Belastungsrichtung als Breite ($b$) bezeichnet. Dabei geht die Höhe ($h$) mit der dritten Potenz ein und die Breite ($b$) einfach beziehungsweise die Höhe ($h$) mit der zweifachen Potenz und die (Teil-)Fläche ($A = h \times b$) mit ihren Abmessungen jeweils einfach, sodass zum Beispiel für ein einfaches Rechteckprofil folgende Formel gilt:

$$I = \frac{h^3 b}{12}$$

Im Stand der Technik wurden daher häufig T-förmige Profile mit großer Höhe verwendet. Dies hat aber den Nachteil, dass die Gesamthöhe einer Packungssäule sehr groß wird. Alternativ wurden Kreuzprofile eingesetzt, die jedoch erstens sehr teuer sind und zweitens Schlitze an einem darunter angeordneten Flüssigkeitssammler erfordern, welcher zum Auffangen von einer Flüssigkeit angeordnet ist. Die Schlitze müssen aufwendig und teuer eingefräst werden. Andere bekannte Profile eignen sich nicht für die vertikale Beströmung in einer Packungssäule, weil sie infolge ihrer großen Breite im Auflagebereich der Packungen unzulässig viele Strömungskanäle der Packungen verdecken und somit den Wirkungsgrad der Packungssäule mindern wie z.B. in US5069830 und US4028442.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus dem unabhängigen Anspruch 1, zu dem vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die der Erfindung zugrundeliegende Aufgabe wird durch eine Packungssäule gelöst, aufweisend zumindest eine Behandlungskammer, zumindest einen Rost, eine Mehrzahl von Trägern, und zumindest eine vertikal durchströmbare Packung, wobei die mindestens eine Packung auf dem mindestens einen Rost aufliegt, und wobei der mindestens eine Rost auf den Trägern aufliegt, wobei der Träger ein Tragprofil mit zumindest den folgenden Elementen aufweist:

- einen in vertikaler Richtung verlaufenden Stegabschnitt mit einem ersten, unteren Ende und einem zweiten, oberen Ende, wobei der Stegabschnitt lediglich eine Strebe aufweist und insbesondere eine größere (vertikale) Höhe als (horizontale) Breite aufweist, und wobei insbesondere die neutrale Achse des Tragprofils durch den Stegabschnitt verläuft;
- einen Fußabschnitt (auch als unterer Flansch bezeichnet) mit einer ersten Breite, wobei der Fußabschnitt sich an das erste Ende des Stegabschnitts anschließt;
- einen Kopfabschnitt mit einer Oberseite und einem, der Oberseite gegenüberliegenden Teilabschnitt in Form einer Unterseite des Kopfabschnitts, wobei der Kopfabschnitt an der Oberseite eine zweite Breite aufweist, und wobei der Teilabschnitt des Kopfabschnitts, also die Unterseite des Kopfabschnitts, eine dritte Breite aufweist.

Erfindungsgemäß weist der Kopfabschnitt einen trapezförmigen Querschnitt auf, wobei die zweite Breite kleiner ist als die dritte Breite, und wobei der Kopfabschnitt zwei in vertikaler Richtung von unten nach oben aufeinander zu laufende Seiten aufweist, die die Unterseite mit der Oberseite des Kopfabschnitts verbinden. Weiterhin kann die zweite Breite kleiner sein als die erste Breite.

Bezogen auf einen im Betrieb befindlichen Träger bzw. einen bestimmungsgemäß angeordneten Träger erstreckt sich der Stegabschnitt in vertikaler Richtung ausgehend vom Fußabschnitt nach oben zum Kopfabschnitt. Die hierin beschriebenen Breiten erstrecken sich - bezogen auf den bestimmungsgemäß angeordneten Träger - sämtlich in horizontaler Richtung. Die hierin beschriebenen Höhen erstrecken sich - bezogen auf den bestimmungsgemäß angeordneten Träger - in der vertikalen Richtung. Weiterhin erstreckt sich der Träger, bezogen auf eine bestimmungsgemäße Anordnung des Trägers, bevorzugt entlang einer Längsachse die entlang der Horizontalen verläuft.

Der Träger ist dazu eingerichtet, sich über eine Mehrzahl von Auflagern, in der Regel zwei Auflager oder ein ringförmiges Auflager, frei zu erstrecken und dabei eine Last, in der Regel eine vertikale Gewichtslast, aufzunehmen. Hierzu weist der Träger ein Tragprofil auf, das in Belastungsrichtung zum einen ein hohes Flächenträgheitsmoment und zum anderen eine geringe Verdeckung für eine Austrittsfläche für ein Fluid, bevorzugt eine Flüssigkeit, in Belastungsrichtung aufweist. Hier wird die auslegungsgemäße Hauptbelastung als Belastung mit der zugehörigen Belastungsrichtung angenommen und weitere Lasten, insbesondere Querlasten nicht beachtet. Gleichwohl ist der Träger auch für derartige, insbesondere gleichzeitige, Lasten geeignet. Die Höhen der einzelnen Komponenten des Trägers erstrecken sich parallel zur Hauptbelastung, und die Breiten der Komponenten senkrecht zur Richtung der Hauptbelastung.

Das Tragprofil lässt sich in drei Hauptabschnitte unterteilen, nämlich den Stegabschnitt, den Fußabschnitt und den Kopfabschnitt. Der Stegabschnitt sorgt für eine ausreichende geometrische Höhe des Tragprofils, um so die Steifigkeit des Tragprofils zu erhöhen, weil die Höhe ($h$) mit der zweiten Potenz in das Flächenträgheitsmoment der Unterabschnitte einfließt. In dem Stegabschnitt ist auch die neutrale Achse angeordnet, um die sich das Biegemoment ausbildet.

In einer bevorzugten Ausführungsform mit einer Gewichtsbelastung und vertikalen Fallströmung ist der Fußabschnitt dazu eingerichtet, die aufgenommene Belastung in die Mehrzahl der Auflager einzuleiten und einen wesentlichen Beitrag zum Biegewiderstand zu leisten, bevorzugt die Zugspannungen aufzunehmen. Dabei liegt der Träger über Teile des Fußabschnitts auf den Auflagern auf. Der Kopfabschnitt bildet dann das Kontaktelement für die Belastung und leistet den zweiten wesentlichen Beitrag zum Biegewiderstand. Der Kopfabschnitt nimmt bevorzugt den Großteil der Druckspannungen auf. Beispielsweise liegt bei einer Gewichtsbelastung eine Masse, zum Beispiel eine durchströmbare Packung, auf dem Kopfabschnitt auf.

Damit sich das hohe Flächenträgheitsmoment mit einer geringen Verdeckung einer gestützten Austrittsfläche (z.B. für eine flüssige Phase) bzw. Eintrittsfläche (z.B. für Gas/Dampf), zum Beispiel einer Packung, verbinden lässt, weist der Kopfabschnitt eine insbesondere entlang der Längsachse verlaufende Oberseite mit einer zweiten Breite und einen Teilabschnitt in Form einer zur Oberseite bevorzugt parallelen Unterseite mit einer dritten Breite auf. Die Oberseite ist dabei der Austrittsfläche bzw. Eintrittsfläche direkt zugewandt. Das heißt, es erstrecken sich bevorzugt ausgehend von der Oberseite keine weiteren Elemente oder Bestandteile des Tragprofils nach oben hin. Die Unterseite des Kopfabschnitts ist der Oberseite abgewandt. Die zweite und dritte Breite des Kopfabschnitts können geringer als die erste Breite des Fußabschnitts sein.

Zum Beispiel bei dem Einsatz eines Trägers mit diesem Tragprofil in einer Packungssäule zur Luftspaltung, steigen die dampfförmigen Bestandteile der beispielsweise bei etwa -180°C [Grad Celsius] siedenden flüssigen Luft durch ihre geringere Dichte entgegen des Schwerefelds der Erde in der Packungssäule auf, wobei ein Teil des Dampfs an der Oberfläche der zumindest einen Packung kondensiert und herabtropft. Das Kondensat tritt an der Austrittsfläche aus, die (insbesondere zumindest mittelbar) auf dem Kopfabschnitt des Trägers aufliegt. Aufgrund der hier vorgeschlagenen vorteilhaften Gestaltung des Tragprofils wird die Austrittsfläche nur geringfügig verdeckt und erlaubt daher ein gutes Abfließen des Kondensats und eine optimale Beaufschlagung der Packung durch die aufwärts strömenden Dämpfe. Zugleich wird ein hohes Flächenträgheitsmoment bei geringer Gesamthöhe erreicht.

Der Kopfabschnitt und der Fußabschnitt sind in vertikaler Richtung einander gegenüberliegend an je einem zugeordneten Ende des Stegabschnitts angeordnet. Besonders bevorzugt bilden alle drei Abschnitte, nämlich der Kopf-, Fuß- und Stegabschnitt, ein einstückiges Tragprofil aus (z.B. durch Strangguss), und gehen besonders bevorzugt spannungsoptimal ineinander über, zum Beispiel über große Übergangsradien.

Wie oben bereits dargelegt, weist der Kopfabschnitt einen trapezförmigen (bevorzugt senkrecht zur Längsachse erstreckten) Querschnitt auf, wobei entsprechend die Oberseite des Kopfabschnitts eine zweite Breite aufweist, die kleiner ist als die dritte Breite des Teilabschnitts bzw. der Unterseite des Kopfabschnitts, wobei die Breite des Kopfabschnitts entsprechend der Trapezform des Querschnitts des Kopfabschnitts kontinuierlich von der dritten Breite in vertikaler Richtung nach oben hin auf die zweite Breite abnimmt.

Der im Querschnitt trapezförmige Kopfabschnitt weist somit zwei in vertikaler Richtung von unten nach oben aufeinander zu laufende Seiten auf, die die Unterseite mit der Oberseite des Kopfabschnitts verbinden. Die Oberseite verläuft in der Horizontalen sowie parallel zur Unterseite des Kopfabschnitts. Insbesondere ist der Kopfabschnitt spiegelsymmetrisch zu einer vertikalen Ebene ausgebildet in der insbesondere die Längsachse des Trägers verläuft. Die Oberseite ist insbesondere - im Einbauzustand - einer Austrittsfläche für eine zum Beispiel abtropfende Flüssigkeit zugewandt und zum Beispiel der Anströmung durch Gas abgewandt. Die dritte Breite des Teilabschnitts bzw. an der Unterseite des Kopfabschnitts ist möglichst breit gestaltet, damit die Fläche des Kopfabschnitts ohne eine übermäßige Vergrößerung der Gesamthöhe des Tragprofils möglichst groß ist und somit der Beitrag zum Flächenträgheitsmoment des Tragprofils möglichst groß ist. Die zweite Breite hingegen ist möglichst gering, um so im Bereich der Austrittsfläche eine möglichst geringe Verdeckung zu erreichen.

Gemäß einer bevorzugten Ausführungsform des Trägers ist der trapezförmige Querschnitt des Kopfabschnitts in der vertikalen Richtung nach oben hin durch ein gedachtes Ergänzungsdreieck zu einem dreieckigen Querschnitt ergänzbar, wobei das Ergänzungsdreieck eine Höhe aufweist, die dem 0,8-fachen bis 1,2-fachen, besonders bevorzugt dem einfachen, der maximalen vertikalen Höhe eines auf den Träger aufzulegenden Rosts entspricht.

Gemäß einer weiteren bevorzugten Ausführungsform des Trägers weist der Fußabschnitt zumindest eine Vertiefung auf, die zumindest eine Tropfnase am Fußabschnitt ausbildet. Die mindestens eine Vertiefung im Fußabschnitt stellt sicher, dass eine den Träger beaufschlagende Flüssigkeit an einer vorbestimmten Stelle des Trägers abtropft und sich möglichst nicht an der dem Steg abgewandten Seite des Fußabschnitts sammelt und dort unkontrolliert abtropft. Die mindestens eine Vertiefung ist dabei bevorzugt derart eingerichtet, dass an einer im Einbau nach unten gerichteten Unterseite des Fußabschnitts eine ausreichend scharfe Kante gebildet wird, die ein adhäsives Fließen der Flüssigkeit entlang der Unterseite des Fußabschnitts verhindert und ein Ablösen der Flüssigkeit fördert. Besonders bevorzugt erstreckt sich die mindestens eine Vertiefung entlang eines Randbereiches bzw. einer Kante der Unterseite des Fußabschnitts. Besonders bevorzugt erstreckt sich die mindestens eine Vertiefung über die gesamte Länge des Trägers.

Wie bereits dargelegt, ist vorgesehen, dass der Stegabschnitt lediglich eine Strebe aufweist, wobei insbesondere die mindestens eine Strebe eine größere vertikale Steghöhe als horizontale Stegbreite aufweist (der Stegabschnitt ist mithin als Strebe ausgebildet), und wobei sich die Strebe in der vertikalen Richtung vom Fußabschnitt zum Kopfabschnitt erstreckt und dabei bevorzugt mittig vom Fußabschnitt abgeht sowie sich bevorzugt mittig an die Unterseite des Kopfabschnitts anschließt.

Gemäß einer bevorzugten Ausführungsform des Trägers ist zumindest eine, bevorzugt mehrere sowie insbesondere alle außenliegenden Ecken des Tragprofils abgerundet. Hierbei werden außenliegende, also im Strömungsfeld liegende, scharfe Kanten vermieden, so dass ein kontinuierliches Abfließen von Flüssigkeit gefördert wird, bevorzugt bis zu einer gebildeten Tropfnase, wo die Flüssigkeit sich an einem vordefinierten Punkt ablöst und gegebenenfalls in eine eingerichtete Auffangeinrichtung fällt.

Die Packungssäule ist zur Behandlung eines Fluids, zum Beispiel zur Luftzerlegung, eingerichtet. Dabei ist ein möglichst hoher Wirkungsgrad erwünscht. Durch die Verwendung von zumindest einem Träger mit dem oben beschriebenen Tragprofil ist die Gesamthöhe der Packungssäule reduzierbar beziehungsweise bei gleicher Höhe die Behandlungsstrecke verlängerbar, weil ein solcher Träger eine geringe Höhe aufweist. Insbesondere kann auf ein teures Einbringen von Schlitzen durch Fräsen in darunterliegende Flüssigkeitssammelkästen verzichtet werden. Darüber hinaus wird ein gutes Abfließen von einer Flüssigkeit aus einer darüber liegenden Packung erreicht und insbesondere eine (übermäßige) Verdeckung von Packungskanälen verhindert.

Die oben beschriebene Erfindung wird nachfolgend vor dem betreffenden technischen Hintergrund unter Bezugnahme auf die zugehörige Zeichnung, die eine bevorzugte Ausgestaltung zeigt, detailliert erläutert. Es wird dargestellt in

    Fig. 1: ein einstrebiges Tragprofil mit einem Kopfabschnitt 13 mit einem trapezförmigen Querschnitt;

    Fig. 2: eine Packungssäule im Schnitt mit erfindungsgemäßen Trägern.

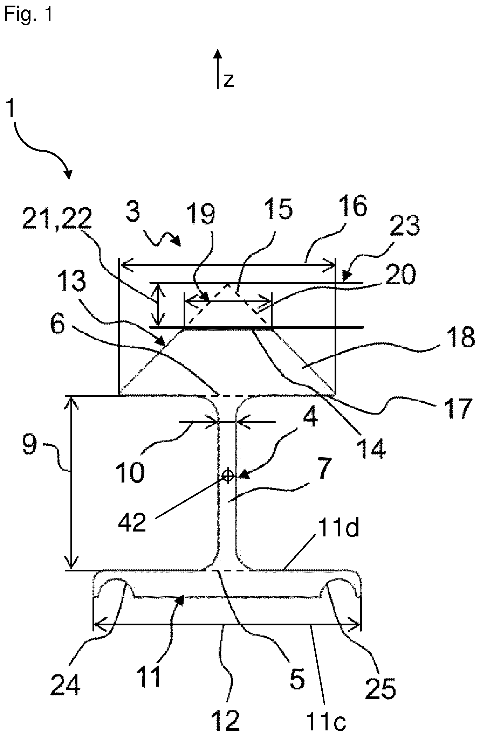

In Fig. 1 ist ein Träger 1 mit einem ersten, einstrebigen Tragprofil 3 dargestellt. Der Träger 1 erstreckt sich bei seiner bestimmungsgemäßen Verwendung bevorzugt entlang einer Längsachse 42, die entlang der Horizontalen verläuft. Der Träger 1 weist weiterhin einen Fußabschnitt 11 auf, der über einen Stegabschnitt 4, der aus einer in vertikaler Richtung erstreckten Strebe 7 besteht, insbesondere einstückig mit einem Kopfabschnitt 13 des Trägers 1 verbunden ist. Der Kopfabschnitt 13 weist eine zweite Breite 15 an der Oberseite 14 und eine dritte Breite 16 an einem Teilabschnitt 17 des Kopfabschnitts 13 auf, bei dem es sich um eine Unterseite 17 des Kopfabschnitts 13 handelt. Ober- und Unterseite verlaufen parallel zueinander entlang der Längsachse 42 und liegen jeweils in einer horizontalen Ebene.

Im gezeigten, senkrecht zur Längsachse 42 erstreckten Querschnitt weist der Kopfabschnitt 13 einen trapezförmigen Querschnitt auf. Der Fußabschnitt 11 weist bevorzugt einen rechteckförmigen Querschnitt auf, der sich ebenfalls senkrecht zur Längsachse erstreckt. Die Querschnittsfläche des Fußabschnitts 11 ist hinsichtlich einer optimalen Spannungsverteilung über den Querschnitt bevorzugt etwa gleich groß wie die Querschnittsfläche des Kopfabschnitts 13. Da die maximal auftretende Spannung stark vom größten Abstand zur neutralen Faser abhängt, ist es spannungstechnisch optimal, die neutrale Faser, die durch den Gesamtflächenschwerpunkt läuft, möglichst mittig im Profilquerschnitt zu halten. Bei stärkerer Gewichtung strömungstechnischer Aspekte, kann es sinnvoll sein, dass die Querschnittsfläche des Fußabschnitts 11 bis zu mehr als doppelt so groß ist, wie die Querschnittsfläche des Kopfabschnitts 13.

Bezogen auf einen bestimmungsgemäß angeordneten Träger 1 liegt der Kopfabschnitt 13 lotrecht oberhalb des Fußabschnitts 11. Die zweite Breite 15 und die dritte Breite 16 sind geringer als eine erste horizontale Breite 12 des Fußabschnitts 11.

Der Stegabschnitt 4 weist ein unteres, erstes Ende 5 auf, über das der Stegabschnitt 4 sich mittig an den Fußabschnitt 11 anschließt, sowie ein in vertikaler Richtung z gegenüberliegendes oberes, zweites Ende 6, über das der Stegabschnitt 4 sich mittig an die Unterseite 17 des Kopfabschnitts 13 anschließt.

Der Fußabschnitt 11 weist des Weiteren an einer nach unten gewandten Unterseite 11c des Fußabschnitts 11 eine konkave erste Vertiefung 24 und eine dazu parallele sowie konkave zweite Vertiefung 25 auf, die jeweils zumindest eine Tropfnase ausbilden. Die Belastungsrichtung für diesen Träger 1 verläuft in der Darstellung von oben nach unten.

Weiterhin ist bevorzugt die Steghöhe 9 des Stegabschnitts 4 bzw. die Höhe der Strebe 7 in vertikaler Richtung deutlich größer als die Stegbreite 10 in der Horizontalen und erzeugt so einen vergleichsweise großen Abstand zwischen dem Kopfabschnitt 13 und dem Fußabschnitt 11. Vorzugsweise ist die Steghöhe 9 zumindest viermal so groß wie die Stegbreite 10.

In Fig. 1 ist ein Tragprofil 3 gezeigt, bei dem der Kopfabschnitt 13 mit einem trapezförmigen Querschnitt senkrecht zur Längsachse des Trägers 1 ausgestaltet ist (hier verläuft die Längsachse 42 des Trägers 1 senkrecht zur Blattebene). Hierbei nimmt die Breite des Kopfabschnitts 13 von der Unterseite 17 des Kopfabschnitts 13 (dritte Breite 16) zur Oberseite 14 hin (zweite Breite 15) kontinuierlich ab, so dass der besagte trapezförmige Querschnitt des Kopfabschnitts 13 resultiert. Die dritte Breite 16 kann insbesondere doppelt so groß oder mehr als doppelt so groß wie die zweite Breite 15 sein.

Hierbei ist der Kopfabschnitt 13 als Stumpf 18 ausgebildet, der sich im gezeigten Querschnitt durch ein gedachtes Ergänzungsdreieck 20 zu einem vollständigen Dreieck 19 ergänzen lässt. In diesem Beispiel entspricht die Höhe 21 des Ergänzungsdreiecks 20 in der vertikalen Richtung z der vertikalen Höhe eines auf die Oberseite 14 des Kopfabschnitts 13 aufzulegenden Rosts 23.

Von der Unterseite 17 des Kopfabschnitts 13, die bei bestimmungsgemäßer Anordnung des Trägers 1 in einer horizontalen Ebene liegt, geht mittig der Stegabschnitt 4 bzw. eine einzelne, den Stegabschnitt 4 bildende Strebe 7 ab, die bis auf einen Übergangsbereich hin zum Fußabschnitt 11 sowie hin zum Kopfabschnitt 13 einen rechteckförmigen Querschnitt aufweist, der in der vertikalen Richtung z längserstreckt ist. Weiterhin schließt sich die Strebe 7 mittig an eine Oberseite 11c des Fußabschnitts 11 an. An einer der Oberseite 11d abgewandten Unterseite 11c weist der Fußabschnitt 11 wiederum entlang der Außenkanten der Unterseite 11c verlaufende konkave Vertiefungen 24, 25 auf, die je eine Tropfnase ausbilden, über die kontrolliert Flüssigkeit nach unten abgegeben werden kann. Die Vertiefungen 24, 25 erstrecken sich bevorzugt parallel zueinander auf der gesamten Länge des Trägers 1.

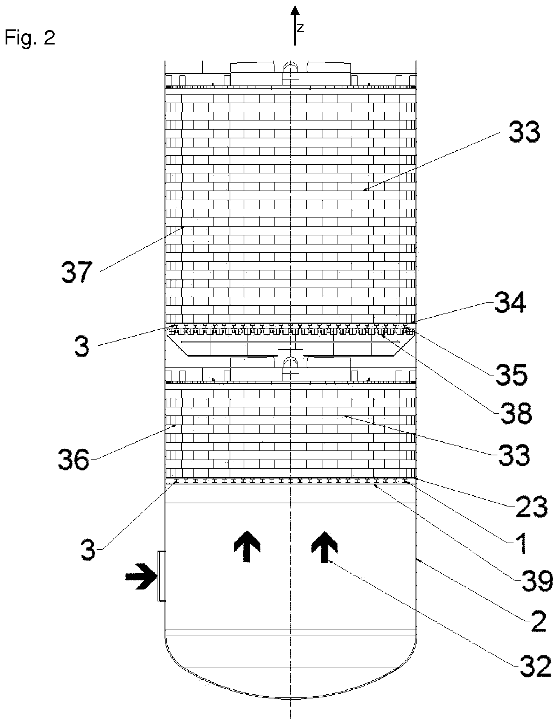

In der Fig. 2 ist eine Packungssäule 2 im Schnitt gezeigt, wobei ein häufig zweiphasig oder gasförmig vorliegendes Fluid 32 darin aufsteigt und zumindest teilweise eine erste Packung 36 und eine zweite Packung 37 passiert. Die Packungen 36 und 37 bilden (jeweils) eine Behandlungskammer 33, in der ein Teil des Fluids 32 an den Oberflächen kondensiert und herabläuft. Hier ist bei der zweiten Packung 37 ein Auffangkanal 38 zu erkennen, der zum Auffangen einer abgeschiedenen Flüssigkeit eingerichtet ist. Die erste Packung 36 liegt auf einem ersten Rost 23 auf, welcher wiederum durch, in der Regel eine Mehrzahl, erster erfindungsgemäßer Träger 1 mit einem ersten Tragprofil 3 gestützt wird, der wiederum auf einem Auflager 39 aufliegt. Die zweite Packung 37 liegt auf einem zweiten Rost 34 auf, welcher wiederum auf einem weiteren Träger 35 aufliegt. Eine solche Packungssäule 2 ist beispielsweise zum Luftzerlegen einsetzbar, wobei das Fluid siedende Luft beziehungsweise eine weitere Fraktionsstufe ist.

Mit dem hier vorgeschlagenen Träger lässt sich eine verringerte Stützhöhe bei gleichzeitig geringer Verdeckung realisieren.

**Bezugszeichenliste**

| | |
|---|---|
| 1 | Träger |
| 2 | Packungssäule |
| 3 | Tragprofil |
| 4 | Stegabschnitt |
| 5 | erstes Ende |
| 6 | zweites Ende |
| 7 | erste Strebe |
| 7a | Außenseite |
| 9 | Steghöhe |
| 10 | Steg breite |
| 11 | Fußabschnitt |
| 11c | Unterseite |
| 11d | Oberseite |
| 12 | erste Breite |
| 13 | Kopfabschnitt |
| 14 | Deckelseite |
| 15 | zweite Breite |
| 16 | dritte Breite |
| 17 | Unterseite bzw. Teilabschnitt |
| 18 | Stumpf |
| 19 | Dreieck |
| 20 | Ergänzungsdreieck |
| 21 | Ergänzungshöhe |
| 22 | Rosthöhe |
| 23 | erster Rost |
| 24 | erste Vertiefung |
| 25 | zweite Vertiefung |
| 32 | Fluid |
| 33 | Behandlungskammer |
| 34 | zweiter Rost |
| 35 | weiterer Träger |
| 36 | erste Packung |
| 37 | zweite Packung |

(fortgesetzt)

| 38 | Auffangkanal |
|----|--------------|
| 39 | Auflager |
| 42 | Längsachse |

## Patentansprüche

1. Packungssäule (2), aufweisend zumindest eine Behandlungskammer (33), zumindest einen Rost (23,34), eine Mehrzahl von Trägern (1,35), und zumindest eine vertikal durchströmbare Packung (36,37), wobei die mindestens eine Packung auf dem mindestens einen Rost (23,34) aufliegt, und wobei der mindestens eine Rost (23,34) auf den Trägern (1,35) aufliegt, wobei der jeweilige Träger (1) ein Tragprofil (3) aufweist, mit:

   - einem in vertikaler Richtung (Z) verlaufenden Stegabschnitt (4), der ein erstes, unteres Ende (5) und ein zweites, oberes Ende (6) aufweist, wobei der Stegabschnitt (4) lediglich eine Strebe (7) aufweist und insbesondere eine größere vertikale Erstreckung als horizontale Erstreckung aufweist,
   - einem Fußabschnitt (11) mit einer ersten Breite (12), wobei der Fußabschnitt (11) sich an das erste Ende (5) des Stegabschnitts (4) anschließt;
   - einem Kopfabschnitt (13), der sich an das zweite Ende (6) des Stegabschnitts (4) anschließt, wobei der Kopfabschnitt (13) eine Oberseite (14) mit einer zweiten Breite (15) aufweist, und wobei der Kopfabschnitt (13) eine Unterseite (17) mit einer dritten Breite (16) aufweist,

   **dadurch gekennzeichnet,**
   **dass** der Kopfabschnitt (13) einen trapezförmigen Querschnitt aufweist, wobei die zweite Breite (15) kleiner ist als die dritte Breite (16), und wobei der Kopfabschnitt (13) zwei in vertikaler Richtung von unten nach oben aufeinander zu laufende Seiten aufweist, die die Unterseite (17) mit der Oberseite (14) des Kopfabschnitts (13) verbinden.

2. Packungssäule nach Anspruch 1, **dadurch gekennzeichnet, dass** die zweite Breite (15) der Oberseite (14) des Kopfabschnitts (13) kleiner ist als die erste Breite (12) des Fußabschnitts (11).

3. Packungssäule nach Anspruch 1 oder 2, **dadurch gekennzeichnet, dass** der trapezförmige Querschnitt des Kopfabschnitts (13) in der vertikalen Richtung (z) nach oben hin durch ein gedachtes Ergänzungsdreieck zu einem dreieckigen Querschnitt ergänzbar ist, wobei das Ergänzungsdreieck (20) eine Höhe (21) aufweist, die dem 0,8-fachen bis 1,2-fachen, besonders bevorzugt dem einfachen, der maximalen vertikalen Rosthöhe (22) eines aufzulegenden Rosts (23) entspricht.

4. Packungssäule nach einem der vorhergehenden Ansprüche, **dadurch gekennzeichnet, dass** der Fußabschnitt (11) zumindest eine Vertiefung (24,25) aufweist, die insbesondere zumindest eine Tropfnase am Fußabschnitt (11) ausbildet.

5. Packungssäule nach einem der vorhergehenden Ansprüche, **dadurch gekennzeichnet, dass** die Strebe (7) eine vertikale Steghöhe (9) aufweist, die größer ist als die horizontale Stegbreite (10) der Strebe (7).

6. Packungssäule nach einem der vorhergehenden Ansprüche, **dadurch gekennzeichnet, dass** zumindest eine, mehrere oder alle außenliegenden Außenkanten des Tragprofils (3) abgerundet sind.

## Claims

1. Packing column (2), having at least one treatment chamber (33), at least one grid (23, 34), a plurality of supports (1, 35) and at least one packing (36, 37) through which a flow can pass vertically, the at least one packing resting on the at least one grid (23, 34), and the at least one grid (23, 34) resting on the supports (1, 35), the respective support (1) having a supporting profile (3), with:

   - a web section (4) running in the vertical direction (Z) which has a first, lower end (5) and a second, upper end (6), the web section (4) having only one strut (7) and having in particular a greater vertical extent than horizontal extent,
   - a foot section (11) of a first width (12), the foot section (11) adjoining the first end (5) of the web section (4),
   - a head section (13), which adjoins the second end (6) of the web section (4), the head section (13) having an upper side (14) of a second width (15), and the head section (13) having an underside (17) of a third width (16),

   **characterized**
   **in that** the head section (13) has a trapezoidal cross section, the second width (15) being less than the third width (16), and the head section (13) having two sides, converging from the bottom upward in the vertical direction which connect the underside (17) to the upper side (14) of the head section (13).

2. Packing column according to Claim 1, **characterized in that** the second width (15) of the upper side (14) of the head section (13) is less than the first width (12) of the foot section (11).

3. Packing column according to Claim 1 or 2, **characterized in that** the trapezoidal cross section of the head section (13) can be supplemented upwardly in the vertical direction (z) by an imaginary supplementary triangle to form a triangular cross section, the supplementary triangle (20) having a height (21) that corresponds to 0.8 to 1.2 times, particularly preferably one times, the maximum vertical grid height (22) of a grid (23) to be placed on.

4. Packing column according to one of the preceding claims, **characterized in that** the foot section (11) has at least one depression (24, 25), which in particular forms at least one drip nose on the foot section (11).

5. Packing column according to one of the preceding claims, **characterized in that** the strut (7, 8), in particular the at least one strut (7) has a vertical web height (9) that is greater than the horizontal web width (10) of the strut (7).

6. Packing column according to one of the preceding claims, **characterized in that** at least one, a number of or all of the external outer edges of the supporting profile (3) is/are rounded off.

**Revendications**

1. Colonne à garnissage (2), présentant au moins une chambre de traitement (33), au moins une grille (23, 34), une pluralité de supports (1, 35), et au moins un garnissage (36, 37) pouvant être parcouru verticalement par un écoulement, l'au moins un garnissage reposant sur l'au moins une grille (23, 34), et l'au moins une grille (23, 34) reposant sur les supports (1, 35), le support respectif (1) présentant un profil porteur (3), comprenant :

   - une portion de nervure (4) s'étendant dans la direction verticale (Z), qui présente une première extrémité inférieure (5) et une deuxième extrémité supérieure (6), la portion de nervure (4) présentant seulement un montant (7) et présentant notamment une étendue verticale plus importante que l'étendue horizontale,
   - une portion de base (11) ayant une première largeur (12), la portion de base (11) se raccordant à la première extrémité (5) de la portion de nervure (4) ;
   - une portion de tête (13) qui se raccorde à la deuxième extrémité (6) de la portion de nervure (4), la portion de tête (13) présentant un côté supérieur (14) avec une deuxième largeur (15), et la portion de tête (13) présentant un côté inférieur (17) avec une troisième largeur (16),

**caractérisée en ce que**
la portion de tête (13) présente une section transversale trapézoïdale, la deuxième largeur (15) étant inférieure à la troisième largeur (16), et la portion de tête (13) présentant deux côtés s'étendant l'un vers l'autre de bas en haut dans la direction verticale, qui relient le côté inférieur (17) au côté supérieur (14) de la portion de tête (13).

2. Colonne à garnissage selon la revendication 1, **caractérisée en ce que** la deuxième largeur (15) du côté supérieur (14) de la portion de tête (13) est inférieure à la première largeur (12) de la portion de base (11).

3. Colonne à garnissage selon la revendication 1 ou 2, **caractérisée en ce que** la section transversale trapézoïdale de la portion de tête (13), dans la direction verticale (Z) vers le haut, peut être complétée par un triangle imaginaire supplémentaire pour former une section transversale triangulaire, le triangle supplémentaire (20) présentant une hauteur (21) qui correspond à 0,8 fois à 1,2 fois, particulièrement préférablement à 1 fois la hauteur de grille verticale maximale (22) d'une grille (23) devant être posée.

4. Colonne à garnissage selon l'une quelconque des revendications précédentes, **caractérisée en ce que** la portion de base (11) présente au moins un renfoncement (24, 25) qui constitue en particulier au moins un nez d'écoulement au niveau de la portion de base (11).

5. Colonne à garnissage selon l'une quelconque des revendications précédentes, **caractérisée en ce que** le montant (7) présente une hauteur de nervure verticale (9) qui est supérieure à la largeur de nervure horizontale (10) du montant (7).

6. Colonne à garnissage selon l'une quelconque des revendications précédentes, **caractérisée en ce qu'**au moins une, plusieurs ou la totalité des arêtes extérieures situées à l'extérieur du profilé porteur (3) sont arrondies.

Fig. 1

Fig. 2

**IN DER BESCHREIBUNG AUFGEFÜHRTE DOKUMENTE**

**In der Beschreibung aufgeführte Patentdokumente**

- US 5069830 A
- US 4028442 A